# EUROPEAN PATENT SPECIFICATION

(11) **EP 4 358 652 B1**
(45) Date of publication and mention of the grant of the patent: **28.10.2026**
(21) Application number: 24162965.8
(22) Date of filing: 28.03.2017
(51) Int. Cl.: H05H 1/34

(54) **IMPROVED ELECTRODE FOR A PLASMA ARC CUTTING SYSTEM AND OPERATIONAL METHOD**
VERBESSERTE ELEKTRODE FÜR EIN PLASMALICHTBOGENSCHNEIDSYSTEM UND BETRIEBSVERFAHREN
ÉLECTRODE AMÉLIORÉE POUR SYSTÈME DE DÉCOUPE À L'ARC PLASMA ET PROCÉDÉ DE FONCTIONNEMENT

(30) Priority: 28.03.2016 US 201662314097 P; 11.04.2016 US 201662320935 P; 09.06.2016 US 201662347856 P
(43) Date of publication of application: 24.04.2024
(62) Document number(s) of the earlier application(s) in accordance with Art. 76 EPC: 17717031.3 / 3 437 440
(73) Proprietor: Hypertherm, Inc., Hanover, NH 03755 (US)
(72) Inventor: Mitra, Madhura S, New Hampshire, 03766 (US); Liebold, Stephen M, New Hampshire, 03753 (US); Jogdand, Harshawardhan, New Hampshire, 03766 (US); Chevalier, Adam, New Hampshire, 03777 (US); Peters, John, New Hampshire, 03741 (US); Mitra, Soumya, New Hampshire, 03766 (US)
(74) Representative: Barker Brettell LLP

(56) References cited:
- WO-A1-2015/015265
- US-A1- 2004 200 810
- US-A1- 2010 078 408

## Description

### FIELD OF THE INVENTION

The invention relates generally to the field of plasma arc cutting systems and processes. More specifically, the invention relates to improved consumable components (e.g., electrodes) and operational methods for cooling a plasma arc torch.

### BACKGROUND

Plasma arc torches are widely used in the cutting and marking of materials. A plasma arc torch generally includes an electrode and a nozzle having a central exit orifice mounted within a torch body, electrical connections, passages for cooling, and passages for arc control fluids (e.g., plasma gas). The torch produces a plasma arc, i.e., a constricted ionized jet of a gas with high temperature and high momentum. Gases used in the torch can be non-reactive (e.g., argon or nitrogen) or reactive (e.g., oxygen or air). During operation, a pilot arc is first generated between the electrode (cathode) and the nozzle (anode). Generation of the pilot arc can be by means of a high frequency, high voltage signal coupled to a DC power supply and the torch or by means of any of a variety of starting methods. US 2010/078408 A1 discloses a nozzle for a plasma torch can include a body that has an inner surface, an outer surface, a proximal end, and an exit orifice at a distal end. The nozzle can also include a liner surrounded by the inner surface of the body. The liner can include a proximal end and an exit orifice at a distal end adjacent the exit orifice of the body. The nozzle can include at least one vent passage formed in the body. The vent passage can have an inlet formed in the inner surface of the body and an outlet formed in the outer surface of the body. The vent passage can be disposed between the proximal end of the body and the proximal end of the liner. The plasma arc torch can include a configuration that allows for increased electrode life and nozzle life for a vented high current plasma process. WO 2015/015265 A1 discloses an arc torch assembly or sub assembly having improved replacement and centering characteristics, where certain components of the torch head have particular characteristics which improve the operation, use and replaceability of the various components. Other embodiments utilize a thread connection which employs multiple separate and distinct thread paths to secure the threaded connections. US 2004/200810 A1 discloses a coolant tube and electrode are adapted to mate with each other to align the tube relative to the electrode during operation of the torch. Improved alignment ensures an adequate flow of coolant along an interior surface of the electrode. In one aspect, an elongated body of the coolant tube has a surface adapted to mate with the electrode. In another aspect, an elongated body of the electrode has a surface adapted to mate with the coolant tube. The surfaces of the tube and electrode may, for example, be flanges, tapered surfaces, contours, or steps.

Current plasma arc torches utilize electrodes having either one or two sealing members (e.g., o-rings) for providing fluid seals within the torch during operation, e.g., to prevent liquids and/or gases from entering certain regions of the torch. One example of such a configuration is in U.S. Patent No. 8,338,740. In most prior art torches, the first contact of the plasma gas with the electrode body is downstream of the swirl ring, so the plasma gas is already swirling when it makes this first contact. What would be beneficial would be an electrode that allows some of the complexity of gas flow to be moved closer to the electrode body, permitting a shorter electrode body to be used in modern complex torches.

### SUMMARY OF THE INVENTION

The present invention relates to systems and methods for improved consumables (e.g., electrodes) for plasma arc torches and associated methods of directing fluid flow and cooling consumables in plasma arc torches. In one aspect, the invention discloses an electrode for a liquid cooled plasma arc torch, according to claim 1.

In another aspect, the invention discloses a method of directing a plasma gas flow in a liquid cooled plasma arc torch, according to claim 11.

Further advantageous embodiments are disclosed in the dependent claims. The present electrode allows some of the complexity of gas flow to be moved closer to the electrode. This allows for more gas flow complexity to be added to a torch without requiring longer torch electrodes. Also, in certain embodiments, the present torch can have an axial swirl and/or an axial flow. Locating the complexity in the interface between the electrode and the swirl ring allows for the improved swirl designs to be used in the torch.

The first sealing element provides a liquid seal. In some embodiments, the first sealing element seals the exterior of the electrode body from a coolant directed to an interior surface of the electrode. In some embodiments, the second sealing element forms a first end of the swirl gas chamber, the first end configured to force a swirl gas radially through an opening of the swirl ring. In some embodiments, the third sealing element seals an end of the swirl gas chamber such that the swirl gas is forced through swirl holes in the swirl ring. In some embodiments, a diameter of the first sealing element is larger than a diameter of the second sealing element. In some embodiments, a diameter of the second sealing element is larger than a diameter of the third sealing element. In some embodiments, the electrode includes a quick-lock thread located near the first end of the body. In some embodiments, the electrode has a tapered shape configured to allow the electrode sealing elements to engage with and slide against adjacent components of the plasma arc torch such that a force required to assemble the electrode in the torch is reduced. In some embodiments, one or more of the sealing elements are o-rings. In some embodiments, the sealing elements are portions of chambers of the plasma arc torch.

### BRIEF DESCRIPTION OF THE DRAWINGS

The foregoing discussion will be understood more readily from the following detailed description of the invention when taken in conjunction with the accompanying drawings.
Figure 1 is an isometric view of an electrode having three sealing elements, according to an illustrative embodiment of the invention.
Figure 2 is a cross-sectional view of a plasma arc torch having an electrode with three sealing members, where the electrode defines a portion of a swirl chamber, according to an illustrative embodiment of the invention.
Figure 3 is a schematic diagram of a method of directing a plasma gas flow in a liquid cooled plasma arc torch, according to an illustrative embodiment of the invention.

### DETAILED DESCRIPTION OF THE DRAWINGS

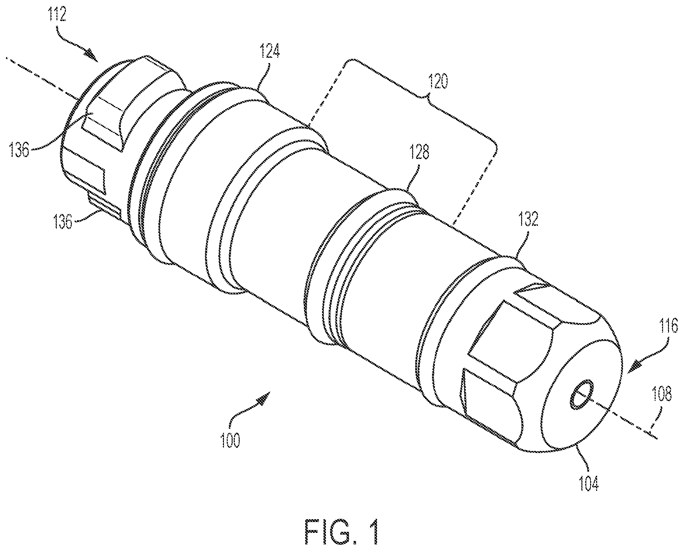

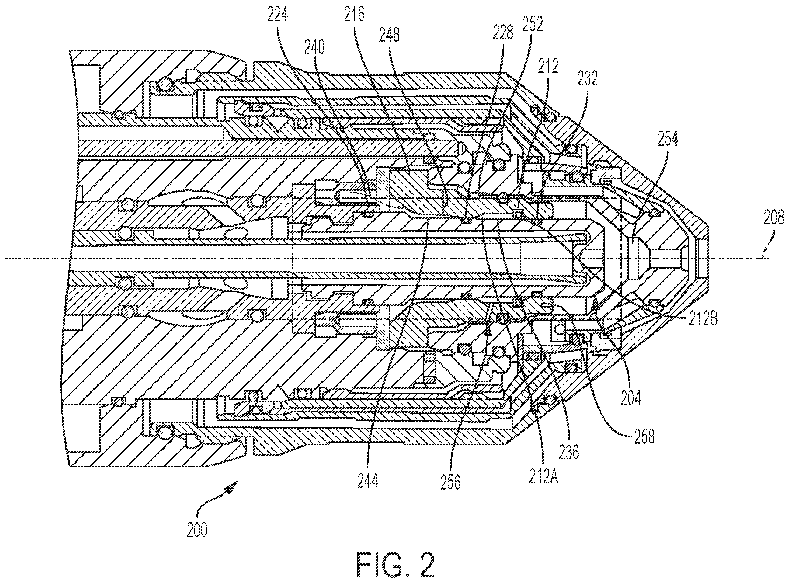

Figure 1 is an isometric view of an electrode 100 having three sealing elements 124, 128, 132, according to an illustrative embodiment of the invention. The electrode 100 includes a body 104 having a longitudinal axis 108 defining a first end 112, a second end 116, and a middle portion 120 between the first end 112 and the second end 116. The electrode 100 includes a first sealing element (or sealing member) 124, a second sealing element 128, and a third sealing element 132, each sealing element 124, 128, 132 positioned along the longitudinal axis 108 of the electrode 100. The first sealing element (or sealing member) 124 is disposed on the exterior of the electrode body 104 near the first end 112. The second sealing element 128 is disposed on the exterior of the electrode body 104 and is located in the middle portion 120 between the first sealing element 124 and the second end 116 along the longitudinal axis 108. When installed in a plasma arc torch, the second sealing element 128 is configured to define a portion of a swirl gas chamber (e.g., the swirl gas chamber 212 shown and described below in Figure 2) and to provide a first gas seal to the swirl gas chamber. The third sealing element 132 is disposed on the exterior of the electrode body 104 and is located between the second sealing element 128 and the second end 116 along the longitudinal axis 108. The third sealing element 132 is configured to define a portion of the swirl gas chamber (e.g., the swirl gas chamber 212 shown and described below in Figure 2) and to provide a second gas seal to the swirl gas chamber.

Each sealing element 124, 128, 132 defines a sealing surface and a different section of the electrode 100 over which a fluid flows when installed in the plasma arc torch (e.g., the plasma arc torch 200 shown and described below in Figure 2). The first sealing element 124 seals the exterior of the electrode 104 from liquid coolants that are directed to the interior of the electrode 100 and around the threads 136. The second sealing element 128 forms a first end of the swirl gas chamber (e.g., the swirl gas chamber 212 shown and described below in Figure 2). The third sealing element 132 seals the second end of the swirl gas chamber. Thus, the second sealing element 128 and the third sealing element 132 each define boundaries of the swirl gas chamber. In some embodiments, the sealing elements 124, 128, 132 are o-rings.

As can be seen in Figure 1 (and correspondingly in Figure 2 below), each sealing element 124, 128, 132 is placed on an exterior surface of the electrode body 104 that has a different diameter. In Figure 1, the first sealing element 124 is on the surface having the largest of the three diameters. The second sealing element 128 is on a surface having an intermediate diameter, and the third sealing element 132 is on a surface having the smallest diameter. In some embodiments, this "tapered" configuration eases assembly of the electrode 100 with the swirl ring within the torch body. Moreover, the threads 136 (e.g., a "quick lock" thread feature) allow the electrode 100 to be fully axially assembled into the torch and rotated to engage the threads 136. In such a configuration, the mechanical advantage of the threads 136 cannot be used to force the sealing elements 124, 128, 132 into corresponding openings in the torch body. Therefore, the "tapered" configuration having different diameters of the electrode body 104 allows the electrode sealing elements 124, 128, 132 to engage with and slide against the adjacent components only for a short distance, reducing the force required to assemble the torch components.

Figure 2 is a cross-sectional view of a plasma arc torch 200 having an electrode 204 with a longitudinal axis 208 and three sealing members 224, 228, 232, the electrode 204 defining a portion of a swirl chamber 212, according to an illustrative embodiment of the invention. When installed in the plasma arc torch 200, the electrode 204 engages with the swirl ring 216, and the sealing members 224, 228, 232 define various boundaries within the plasma arc torch 200. For example, the first sealing member 224 defines a water cooling boundary that seals the exterior surface of the electrode 204 a coolant directed to an interior surface of the electrode 204. The second sealing member 228 defines a first (or "metering" as explained below) boundary of the swirl gas chamber 212. The third sealing member 232 defines a second (or "swirling" as explained below) boundary of the swirl gas chamber 212. Thus, a portion of the swirl gas chamber 212 is defined by the second sealing member 228 and the third sealing member 232, together with the section of electrode wall 236 located between the second sealing member 228 and the third sealing member 232.

During operation of the plasma arc torch 200, swirl gas travels along a flow path 240 past the first sealing member 224 along an exterior surface 244 of the electrode 204. The swirl gas (or plasma gas) enters in the open rear chamber of the swirl ring 216. The rear chamber is defined as the gap between the interior of the swirl ring 216, the exterior surface 244 of the electrode, and the second sealing member 228. Once the swirl gas enters into the rear chamber it next directed through openings 248 as the second sealing member 228 prevents the gas from flow forward. Opening 248 extending from the interior of the swirl ring 216 to the exterior of the swirl ring and is oriented radially (e.g., orthogonally to the longitudinal axis 208) and flows into a torch passageway 252. The torch passageway is defined by the exterior of the electrode, and swirl gas continues along fluid flow path 240 toward a first end 212A of the swirl gas chamber 212 through metering holes (e.g. metering hole 256) in the swirl ring 216. The metering holes meter the swirl gas flow from the exterior of the swirl ring 216 into the swirl gas chamber 212. Swirl gas then flows onto a second end 212B of the swirl gas chamber 212 through an opening and to the outside of the swirl ring. The third sealing element 232 seals the second end 212B of the swirl gas chamber 212 such that swirl gas is forced through the swirl holes (not visible) in the front of the swirl ring and into the plasma plenum 254. Thus, the second sealing member 228 and the third sealing member 232 define a swirl gas chamber 212 that receives plasma gas from metering holes and discharges plasma gas through swirl holes. In some embodiments, it is beneficial to maintain separate swirl holes and metering holes because each set of holes performs a separate function requiring a different corresponding structure.

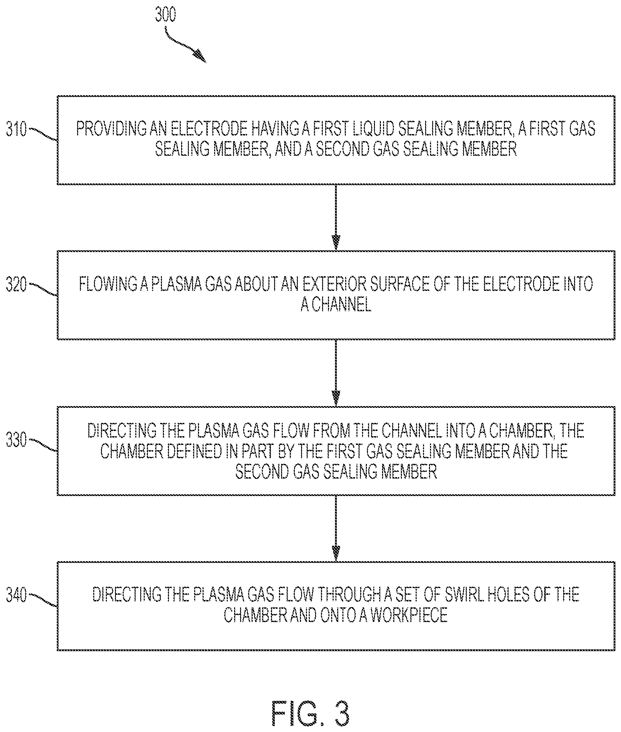

Figure 3 is a schematic diagram of a method 300 of directing a plasma gas flow in a liquid cooled plasma arc torch, according to an illustrative embodiment of the invention. The method 300 includes a step 310 providing an electrode having a first liquid sealing member, a first gas sealing member, and a second gas sealing member. The method 300 includes a step 320 of flowing a plasma gas about an exterior surface of the electrode into a channel. The method 300 includes a step 330 of directing the plasma gas flow from the channel into a chamber, the chamber defined in part by the first gas sealing member and the second gas sealing member. The method 300 includes a step 340 of directing the plasma gas flow through a set of swirl holes of the chamber and onto a workpiece.

While the invention has been particularly shown and described with reference to specific preferred embodiments, it should be understood by those skilled in the art that various changes in from and detail may be made therein without departing from the scope of the invention as defined by the following claims.

## Claims

1. An electrode (100, 204) for a liquid cooled plasma arc torch, the electrode (100, 204) comprising:
a body (104) having a longitudinal axis (108, 208) defining a first end (112), a second end (116), and a middle portion (120) between the first and second ends (112, 116);
a first sealing element (124, 224) disposed on an exterior of the body (104) near the first end (112) of the body (104), the first sealing element (124, 224) configured to provide a liquid seal;
a second sealing element (128, 228) disposed on the exterior of the body (104), the second sealing element (128, 228) located in the middle portion (120) between the first sealing element (124,224)
and the second end (116) of the body (104) along the longitudinal axis (108, 208), the second sealing element (128) configured to provide a first gas seal to a swirl gas chamber thereby defining a portion of the swirl gas chamber (212); and
a third sealing element (132, 232) disposed on the exterior of the body (104), the third sealing element (132, 232) located between the second sealing element (128, 228) and the second end (116) of the body (104) along the longitudinal axis (108, 208), the third sealing element (132, 232) configured to provide a second gas seal to the swirl gas chamber and defining a portion of the swirl gas chamber (212); **characterized in that** the second sealing element (128, 228) is configured to prevent forward flow of a swirl gas flow and direct the flow radially outwardly.

2. The electrode (100, 204) of claim 1 wherein the first sealing element (124, 224) seals the exterior of the electrode body (104) from a coolant directed to an interior surface of the electrode (100, 204).

3. The electrode (100, 204) of claim 1 wherein the second sealing element (128, 228) forms a first end of the swirl gas chamber (212), the first end (112) configured to force the swirl gas flow radially through an opening of a swirl ring.

4. The electrode (100, 204) of claim 3 wherein the third sealing element (132, 232) seals an end of the swirl gas chamber (212) such that the swirl gas flow is forced through swirl holes in the swirl ring.

5. The electrode (100, 204) of claim 1 wherein a diameter of the first sealing element (124, 224) is larger than a diameter of the second sealing element (128, 228).

6. The electrode (100, 204) of claim 1 wherein a diameter of the second sealing element (128, 228) is larger than a diameter of the third sealing element (132, 232).

7. The electrode (100, 204) of claim 1 further comprising a quick-lock thread located near the first end (112) of the body (104).

8. The electrode (100, 204) of claim 1 wherein the electrode (100, 204) has a tapered shape configured to allow the electrode (100, 204) sealing elements (124, 128, 132, 224, 228, 232) to engage with and slide against adjacent components of the plasma arc torch such that a force required to assemble the electrode (100, 204) in the torch is reduced.

9. The electrode (100, 204) of claim 1 wherein one or more of the sealing elements (124, 128, 132, 224, 228, 232) are o-rings.

10. The electrode (100, 204) of claim 1 wherein the sealing elements (124, 128, 132) are portions of chambers of the plasma arc torch.

11. A method (300) of directing a plasma gas flow in a liquid cooled plasma arc torch, the method (300) comprising:
providing an electrode having a first sealing element (124,224) being a first liquid sealing member, a second sealing element (128,228) being a first gas sealing member, and a third sealing element (132,232) being a second gas sealing member (step 310);
flowing a plasma gas about an exterior surface of the electrode into a channel (step 320);
directing the plasma gas flow from the channel into a chamber, the chamber defined in part by the first gas sealing member and the second gas sealing member (step 330), and directing the plasma gas flow through a set of swirl holes of the chamber and onto a workpiece (step 340); **characterized in that** the first gas sealing member is configured to prevent the forward flow of the plasma gas flow and to direct the flow radially outwardly

## Patentansprüche

1. Elektrode (100, 204) für einen flüssigkeitsgekühlten Plasmabogenbrenner, wobei die Elektrode (100, 204) umfasst:
einen Körper (104) mit einer Längsachse (108, 208), die ein erstes Ende (112), ein zweites Ende (116) und einen mittleren Abschnitt (120) zwischen dem ersten und dem zweiten Ende (112, 116) definiert;
ein erstes Dichtungselement (124, 224), das an einer Außenseite des Körpers (104) nahe dem ersten Ende (112) des Körpers (104) angeordnet ist, wobei das erste Dichtungselement (124, 224) dazu konfiguriert ist, eine Flüssigkeitsdichtung bereitzustellen;
ein zweites Dichtungselement (128, 228), das an der Außenseite des Körpers (104) angeordnet ist, wobei sich das zweite Dichtungselement (128, 228) in dem mittleren Abschnitt (120) zwischen dem ersten Dichtungselement (124, 224) und dem zweiten Ende (116) des Körpers (104) entlang der Längsachse (108, 208) befindet, wobei das zweite Dichtungselement (128) dazu konfiguriert ist, einer Wirbelgaskammer eine erste Gasdichtung bereitzustellen, wodurch ein Abschnitt der Wirbelgaskammer (212) definiert wird; und
ein drittes Dichtungselement (132, 232), das an der Außenseite des Körpers (104) angeordnet ist, wobei sich das dritte Dichtungselement (132, 232) zwischen dem zweiten Dichtungselement (128, 228) und dem zweiten Ende (116) des Körpers (104) entlang der Längsachse (108, 208) befindet, wobei das dritte Dichtungselement (132, 232) dazu konfiguriert ist, der Wirbelgaskammer eine zweite Gasdichtung bereitzustellen, und einen Abschnitt der Wirbelgaskammer (212) definiert; **dadurch gekennzeichnet, dass** das zweite Dichtungselement (128, 228) dazu konfiguriert ist, einen Vorwärtsfluss einer Wirbelgasströmung zu verhindern und die Strömung radial nach außen zu leiten.

2. Elektrode (100, 204) nach Anspruch 1, wobei das erste Dichtungselement (124, 224) die Außenseite des Elektrodenkörpers (104) gegen ein Kühlmittel abdichtet, das zu einer Innenfläche der Elektrode (100, 204) gerichtet ist.

3. Elektrode (100, 204) nach Anspruch 1, wobei das zweite Dichtungselement (128, 228) ein erstes Ende der Wirbelgaskammer (212) bildet, wobei das erste Ende (112) dazu konfiguriert ist, den Wirbelgasfluss radial durch eine Öffnung eines Wirbelrings zu zwingen.

4. Elektrode (100, 204) nach Anspruch 3, wobei das dritte Dichtungselement (132, 232) ein Ende der Wirbelgaskammer (212) derart abdichtet, dass der Wirbelgasfluss durch Wirbellöcher in dem Wirbelring gedrängt wird.

5. Elektrode (100, 204) nach Anspruch 1, wobei ein Durchmesser des ersten Dichtungselements (124, 224) größer als ein Durchmesser des zweiten Dichtungselements (128, 228) ist.

6. Elektrode (100, 204) nach Anspruch 1, wobei ein Durchmesser des zweiten Dichtungselements (128, 228) größer als ein Durchmesser des dritten Dichtungselements (132, 232) ist.

7. Elektrode (100, 204) nach Anspruch 1, ferner umfassend ein Schnellverschlussgewinde, das sich nahe dem ersten Ende (112) des Körpers (104) befindet.

8. Elektrode (100, 204) nach Anspruch 1, wobei die Elektrode (100, 204) eine verjüngte Form aufweist, die dazu konfiguriert ist, es den Dichtungselementen (124, 128, 132, 224, 228, 232) der Elektrode (100, 204) zu ermöglichen, mit benachbarten Komponenten des Plasmabogenbrenners in Eingriff zu treten und an diese zu gleiten, sodass eine Kraft, die erforderlich ist, um die Elektrode (100, 204) in dem Brenner zu montieren, reduziert wird.

9. Elektrode (100, 204) nach Anspruch 1, wobei eines oder mehrere der Dichtungselemente (124, 128, 132, 224, 228, 232) O-Ringe sind.

10. Elektrode (100, 204) nach Anspruch 1, wobei die Dichtungselemente (124, 128, 132) Abschnitte von Kammern des Plasmabogenbrenners sind.

11. Verfahren (300) zum Leiten eines Plasmagasstroms in einen flüssigkeitsgekühlten Plasmabogenbrenner, wobei das Verfahren (300) umfasst:
Bereitstellen einer Elektrode, die ein erstes Dichtungselement (124, 224), das ein erstes Flüssigkeitsdichtelement ist, ein zweites Dichtungselement (128, 228), das ein erstes Gasdichtelement ist, und ein drittes Dichtungselement (132, 232), das ein zweites Gasdichtelement ist, aufweist (Schritt 310);
Fließenlassen eines Plasmagases um eine Außenfläche der Elektrode in einen Kanal (Schritt 320);
Leiten des Plasmagasstroms aus dem Kanal in eine Kammer, wobei die Kammer teilweise durch das erste Gasdichtelement und das zweite Gasdichtelement definiert ist (Schritt 330), und Leiten des Plasmagasstroms durch einen Satz von Wirbellöchern der Kammer und auf ein Werkstück (Schritt 340); **dadurch gekennzeichnet, dass** das erste Gasdichtelement dazu konfiguriert ist, den Vorwärtsstrom des Plasmagasstroms zu verhindern und den Strom radial nach außen zu leiten.

## Revendications

1. Électrode (100, 204) pour une torche à arc de plasma refroidie par liquide, l'électrode (100, 204) comprenant :
un corps (104) présentant un axe longitudinal (108, 208) définissant une première extrémité (112), une seconde extrémité (116) et une partie médiane (120) entre les première et seconde extrémités (112, 116) ;
un premier élément d'étanchéité (124, 224) disposé sur l'extérieur du corps (104) près de la première extrémité (112) du corps (104), le premier élément d'étanchéité (124, 224) étant configuré pour assurer une étanchéité aux liquides ;
un deuxième élément d'étanchéité (128, 228) disposé sur l'extérieur du corps (104), le deuxième élément d'étanchéité (128, 228) étant situé dans la partie médiane (120) entre le premier élément d'étanchéité (124,224) et la seconde extrémité (116) du corps (104) le long de l'axe longitudinal (108, 208), le deuxième élément d'étanchéité (128) étant configuré pour assurer une première étanchéité aux gaz vis-à-vis d'une chambre de gaz de tourbillonnement, définissant ainsi une partie de la chambre de gaz de tourbillonnement (212) ; et
un troisième élément d'étanchéité (132, 232) disposé sur l'extérieur du corps (104), le troisième élément d'étanchéité (132, 232) étant situé entre le deuxième élément d'étanchéité (128, 228) et la seconde extrémité (116) du corps (104) le long de l'axe longitudinal (108, 208), le troisième élément d'étanchéité (132, 232) étant configuré pour assurer une seconde étanchéité aux gaz vis-à-vis de la chambre de gaz de tourbillonnement et définissant une partie de la chambre de gaz de tourbillonnement (212) ; **caractérisée en ce que** le deuxième élément d'étanchéité (128, 228) soit configuré pour empêcher un écoulement vers l'avant du gaz de tourbillonnement et pour diriger l'écoulement radialement vers l'extérieur.

2. Électrode (100, 204) selon la revendication 1, dans laquelle le premier élément d'étanchéité (124, 224) isole l'extérieur du corps d'électrode (104) d'un liquide de refroidissement dirigé vers une surface intérieure de l'électrode (100, 204).

3. Électrode (100, 204) selon la revendication 1, dans laquelle le deuxième élément d'étanchéité (128, 228) forme une première extrémité de la chambre de gaz de tourbillonnement (212), la première extrémité (112) étant configurée pour forcer le gaz de tourbillonnement à s'écouler radialement à travers une ouverture d'un anneau de tourbillonnement.

4. Électrode (100, 204) selon la revendication 3, dans laquelle le troisième élément d'étanchéité (132, 232) scelle une extrémité de la chambre de gaz de tourbillonnement (212) de sorte que le gaz de tourbillonnement soit forcé de traverser des trous de tourbillonnement dans l'anneau de tourbillonnement.

5. Électrode (100, 204) selon la revendication 1, dans laquelle le diamètre du premier élément d'étanchéité (124, 224) est supérieur au diamètre du deuxième élément d'étanchéité (128, 228).

6. Électrode (100, 204) selon la revendication 1, dans laquelle le diamètre du deuxième élément d'étanchéité (128, 228) est supérieur au diamètre du troisième élément d'étanchéité (132, 232).

7. Électrode (100, 204) selon la revendication 1, comprenant en outre un filetage à verrouillage rapide situé près de la première extrémité (112) du corps (104).

8. Électrode (100, 204) selon la revendication 1, dans laquelle l'électrode (100, 204) présente une forme effilée configurée pour permettre aux éléments d'étanchéité (124, 128, 132, 224, 228, 232) de l'électrode (100, 204) de venir en prise avec des composants adjacents de la torche à arc de plasma et de glisser contre ces derniers, de sorte qu'une force requise pour assembler l'électrode (100, 204) dans la torche soit réduite.

9. Électrode (100, 204) selon la revendication 1, dans laquelle un ou plusieurs des éléments d'étanchéité (124, 128, 132, 224, 228, 232) sont des joints toriques.

10. Électrode (100, 204) selon la revendication 1, dans laquelle les éléments d'étanchéité (124, 128, 132) sont des parties de chambres de la torche à arc de plasma.

11. Procédé (300) pour diriger un écoulement de gaz de plasma dans une torche à arc de plasma refroidie par liquide, le procédé (300) comprenant :
la fourniture d'une électrode présentant un premier élément d'étanchéité (124,224) constituant un premier organe d'étanchéité aux liquides, un deuxième élément d'étanchéité (128,228) constituant un premier organe d'étanchéité aux gaz et un troisième élément d'étanchéité (132,232) constituant un second organe d'étanchéité aux gaz (étape 310) ;
la mise en circulation d'un gaz de plasma autour d'une surface extérieure de l'électrode jusque dans un canal (étape 320) ;
le guidage de l'écoulement de gaz de plasma depuis le canal jusque dans une chambre, la chambre étant définie en partie par le premier organe d'étanchéité aux gaz et le second organe d'étanchéité aux gaz (étape 330), et le guidage de l'écoulement de gaz de plasma à travers un ensemble de trous de tourbillonnement de la chambre et sur une pièce à usiner (étape 340) ; **caractérisé en ce que** le premier organe d'étanchéité aux gaz soit configuré pour empêcher l'écoulement vers l'avant du gaz de plasma et pour diriger l'écoulement radialement vers l'extérieur.
